# EUROPEAN PATENT APPLICATION

(11) **EP 4 722 583 A1**
(43) Date of publication of application: **08.04.2026**
(21) Application number: 24819239.5
(22) Date of filing: 29.05.2024
(51) Int. Cl.: F21S 2/00, F21Y 115/10

(54) **MULTILAYER FILM AND ROLL**

(30) Priority: 05.06.2023 JP 2023092333
(71) Applicant: Nitto Denko Corporation, Ibaraki-shi, Osaka 567-8680 (JP)
(72) Inventor: KUNO, Jumpei, Ibaraki-shi, Osaka 567-8680 (JP); NAKAMURA, Kozo, Ibaraki-shi, Osaka 567-8680 (JP)
(74) Representative: Hoffmann Eitle
(86) International application number: PCT/JP2024/019784
(87) International publication number: WO 2024/253008

(57) **Abstract**

An object is to provide a laminated film and a roll having excellent designability. The laminated film includes: a light guide element configured to guide light incident from a light source; and a low refractive index layer disposed on one side of the light guide element and having a refractive index of 1.30 or less. The light guide element includes a light extraction portion configured to extract light guided by the light guide element. The thickness of the light guide element is 1000 µm or less, and the total thickness from a first surface of the light guide element, which is the surface on the side opposite to the side on which the low refractive index layer is disposed, to a second surface of the low refractive index layer, which is opposite to the light guide element, is 1500 µm or less.

## Description

### Technical Field

The present invention relates to a laminated film, and a roll.

### Background Art

A method has been proposed in which a laminated film is disposed on a building member such as glass, a window, a wall, a floor, or a ceiling so as to realize illumination or display with excellent designability or entertainment properties.

For example, Patent Document 1 discloses a configuration including a light guide plate and a first protective plate that is entirely bonded to one surface of the light guide plate with a low refractive index resin having a refractive index lower than that of the light guide plate.

### Citation List

### Patent Literature

[PTL 1] Japanese Laid-open Patent Publication No. 2008-299117

### Summary of Invention

### Technical Problem

However, in the configuration of Patent Document 1, the designability of the laminated film may be reduced due to the thickness of the structure including the light guide plate and the first protective plate.

An object of the present invention is to provide a laminated film and a roll having excellent designability.

### Solution to Problem

A laminated film according to one aspect of the present invention includes:
a light guide element configured to guide light incident thereto from a light source; and
a low refractive index layer disposed on one side of the light guide element and having a refractive index of 1.30 or less,
wherein the light guide element includes a light extraction portion configured to extract the light guided by the light guide element,
a thickness of the light guide element is 1000 µm or less, and
a total thickness from a first surface to a second surface is 1500 µm or less, the first surface being a surface of the light guide element on a side opposite to a side on which the low refractive index layer is disposed, and the second surface being a surface of the low refractive index layer on a side opposite to the light guide element.

### Advantageous Effects of Invention

According to one aspect of the present invention, a laminated film and a roll having excellent designability can be provided.

### Brief Description of Drawings

[FIG. 1] FIG. 1 is a schematic cross-sectional view of a laminated film according to an embodiment;
[FIG. 2] FIG. 2 is a schematic plan view of a light extraction layer according to the embodiment;
[FIG. 3] FIG. 3 is a cross-sectional view taken along line III-III in FIG. 2;
[FIG. 4] FIG. 4 is a schematic cross-sectional view of a light extraction portion according to the embodiment;
[FIG. 5] FIG. 5 is a schematic cross-sectional view of a light extraction portion according to Example 1; and
[FIG. 6] FIG. 6 is a schematic plan view of the light extraction portion according to Example 1.

### Description of Embodiments

An embodiment of the present invention will now be described in detail with reference to the accompanying drawings. In the drawings, the same reference numerals denote the same components, and duplicative descriptions are omitted as appropriate.

The embodiment described below illustrates a laminated film that embodies the technical concept (or spirit) of the present invention, and the present invention is not limited to the embodiment. Unless otherwise specified, the dimensions, materials, shapes, relative arrangements, and the like of the components described below are not intended to limit the scope of the present invention, but are merely illustrative. In addition, the sizes, positional relationships, and the like of the components illustrated in the drawings may be exaggerated for clarity of description.

In the drawings described below, an orthogonal coordinate system having X-axis, Y-axis, and Z-axis is used for directional representation. The X-axis, Y-axis, and Z-axis are substantially orthogonal to each other. A direction in which an arrow of the X-axis points is referred to as the +X direction or +X side, and a direction opposite thereto is referred to as the -X direction or -X side. Similarly, a direction in which an arrow of the Y-axis points is referred to as the +Y direction or +Y side, and a direction opposite thereto is referred to as the -Y direction or -Y side. A direction in which an arrow of the Z-axis points is referred to as the +Z direction or +Z side, and a direction opposite thereto is referred to as the -Z direction or -Z side.

The Z direction along the Z-axis represents the lamination direction of the respective layers constituting the laminated film according to the embodiment. In the present specification, the term "plan view" refers to viewing an object from the Z direction. The +Z direction is referred to as "up." The adherend on which the laminated film according to the embodiment is disposed is located in the -Z direction with respect to the laminated film. However, these directional indications do not limit the orientation of the embodiment. In the present specification, the term "thickness" refers to the length of an object in the Z direction, that is, in the lamination direction of the respective layers. The cross-sectional view illustrates a section parallel to the YZ plane of the laminated film according to the embodiment.

### [Embodiment]

### <Example of Overall Configuration of Laminated Film 10 According to an Embodiment>

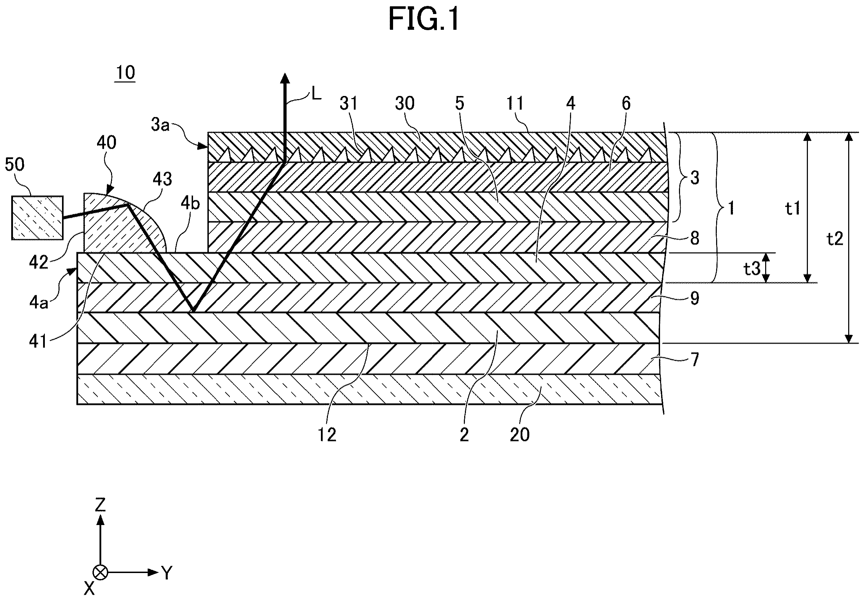

FIG. 1 is a cross-sectional view schematically illustrating an example of a laminated film 10 according to a first embodiment. In the example illustrated in FIG. 1, the laminated film 10 includes a light guide element 1 configured to guide light L that is incident from a light source 50, and a low refractive index layer 2 disposed on one side of the light guide element 1 and having a refractive index of 1.30 or less. The low refractive index layer 2 may be disposed on one side of the light guide element 1 via a third pressure-sensitive adhesive layer (also referred to as a third adhesive layer) 9. The light guide element 1 includes a light extraction portion 31 configured to extract the light L guided by the light guide element 1. The thickness t1 of the light guide element 1 is 1000 µm or less. The thickness t1 of the light guide element 1 is preferably 800 µm or less, 700 µm or less, 600 µm or less, 500 µm or less, 400 µm or less, or 300 µm or less. Although the lower limit is not particularly specified, the thickness t1 is preferably 100 µm or more, or 200 µm or more. The total thickness t2 from a first surface 11, which is a surface of the light guide element 1 on the side opposite to the side on which the low refractive index layer 2 is disposed, to a second surface 12, which is a surface of the low refractive index layer 2 on the side opposite to the light guide element 1, is 1500 µm or less. The total thickness t2 is preferably 1000 µm or less, 800 µm or less, 700 µm or less, 600 µm or less, 500 µm or less, 400 µm or less, or 300 µm or less. Although the lower limit is not particularly specified, the total thickness t2 is preferably 100 µm or more, or 200 µm or more.

In the laminated film 10, the light guide element 1 guides light L incident from the light source 50, and the light extraction portion 31 extracts the light L from inside to outside of the light guide element 1. The laminated film 10 can illuminate a space in which the laminated film 10 is disposed by the light L extracted from the light guide element 1. The light source 50 is, for example, an LED (Light Emitting Diode) light source.

In the laminated film 10, by setting the thickness t1 of the light guide element 1 to 1000 µm or less and setting the total thickness t2 to 1500 µm or less, it is possible to reduce the visual presence of the laminated film 10 and make the laminated film 10 less noticeable. In this embodiment, by reducing the visual presence of the laminated film 10, the laminated film 10 having excellent designability can be provided. In addition, the laminated film 10 can enhance the designability of an adherend 20 on which the laminated film 10 is disposed.

In addition, in the laminated film 10, by setting the total thickness t2 to 1500 µm or less, the laminated film 10 can be made flexible. By providing flexibility to the laminated film 10, it is possible to reduce placement defects such as wrinkles or air entrapment between the laminated film 10 and the adherend 20 when the laminated film 10 is disposed on the adherend 20. Unlike the conventional case in which a light guide plate is a plate-like member, the light guide element is capable of being handled in an integrated state as a roll. Accordingly, in the present embodiment, it is possible to provide a roll on which the laminated film 10 having excellent designability is wound.

In addition, when the light L guided within the laminated film 10 reaches the adherend 20 on which the laminated film 10 is disposed, the light L reaching the adherend 20 may be scattered, resulting in attenuation of the luminance of illumination light, or may be absorbed, resulting in a change in hue of the illumination light. For example, when the adherend 20 is float glass, the float glass absorbs light having a wavelength corresponding to red among the light L that has reached it, so that the illumination light appears bluish. Since the laminated film 10 includes the low refractive index layer 2, the light L guided by the light guide element 1 is totally reflected by the low refractive index layer 2, thereby reducing the amount of light L reaching the adherend 20. As a result, attenuation of luminance and change in hue of the illumination light caused by the laminated film 10 can be reduced.

The laminated film 10 can be disposed on the adherend 20. Examples of the adherend 20 include glass, windows, walls, floors, ceilings, and the like. For example, the laminated film 10 may be disposed by being attached to the surface of the adherend 20.

The laminated film 10 can be formed of a resin. Since the laminated film 10 is formed of a resin, it exhibits high flexibility and can be handled in various forms. For example, before being disposed on the adherend 20, the laminated film 10 may be provided with a release liner on a first pressure-sensitive adhesive layer (also referred to as a first adhesive layer) 7, and can be handled in the form of a long roll, thereby facilitating handling. However, the laminated film 10 is not necessarily required to be formed entirely of a resin, and at least a part of the laminated film 10 may be formed of glass or the like.

The laminated film 10 may include the first adhesive layer 7 disposed on the side of the low refractive index layer 2 opposite to the light guide element 1. By including the first adhesive layer 7, the laminated film 10 can fix the light guide element 1, the third adhesive layer 9, and the low refractive index layer 2 onto the adherend 20.

The light guide element 1 may include a light extraction layer 3 including a light extraction portion 31 and a transmissive layer 4 that transmits light L incident from a light source 50. By including the light extraction layer 3 and the transmissive layer 4, the light guide element 1 can guide light L incident from the light source 50 and extract the light L from the inside to the outside of the light guide element 1.

In the laminated film 10, the thickness t3 of the transmissive layer 4 may be 30 µm or more. By setting the thickness t3 of the transmissive layer 4 to 30 µm or more, the incidence efficiency of light L from the light source 50 into the laminated film 10 can be increased.

The light extraction portion 31 may be a plurality of internal spaces provided in the light extraction layer 3. When the light extraction portion 31 is formed of a plurality of internal spaces provided in the light extraction layer 3, the laminated film 10 can extract highly directional light L from the inside of the light guide element 1 to the outside.

The laminated film 10 may include a second pressure-sensitive adhesive layer (also referred to as a second adhesive layer) 8 disposed between the transmissive layer 4 and the light extraction layer 3. The ratio of the thickness of the second adhesive layer 8 to the thickness of the light guide element 1 may be 10% or more, preferably 15% or more, and more preferably 20% or more. The upper limit is not particularly specified, but is, for example, 50% or less, and preferably 40% or less. By disposing such a second adhesive layer 8 between the transmissive layer 4 and the light extraction layer 3, the laminated film 10 can suitably exhibit flexibility.

In plan view, an end portion 3a of the light extraction layer 3 may be located inside an end portion 4a of the transmissive layer 4. For example, the distance between the end portion 3a of the light extraction layer 3 and the end portion 4a of the transmissive layer 4 may be 1 mm or more and 100 mm or less. In this context, "inside in plan view" refers to a side closer to the center of the laminated film 10 when the laminated film 10 is viewed in plan view. Since the end portion 3a of the light extraction layer 3 is located inside the end portion 4a of the transmissive layer 4 in plan view, a member that allows the light L from the light source 50 to be incident on the laminated film 10 may be disposed in a region 4b of the transmissive layer 4 where the light extraction layer 3 and the transmissive layer 4 do not overlap. Accordingly, the incidence efficiency of the light L from the light source 50 into the laminated film 10 can be increased. The region 4b is defined by the end portion 3a of the light extraction layer 3 and the end portion 4a of the transmissive layer 4.

The laminated film 10 may include an optical incoupling element 40 which is disposed in the region 4b of the transmissive layer 4, where the light extraction layer 3 and the transmissive layer 4 do not overlap in plan view, and causes the light L from the light source 50 to be incident into the laminated film 10. This configuration makes it easier for the light L from the light source 50 to enter the laminated film 10.

The light extraction layer 3 may include a light extraction portion forming layer 30 having the light extraction portion 31 formed thereon, a base material 5, and a fourth adhesive layer (also referred to as a fourth adhesive layer) 6 which is disposed between the light extraction portion forming layer 30 and the base material 5, and adheres the light extraction portion forming layer 30 to the base material 5. The laminated film 10 may further include a third adhesive layer 9 which is disposed between the transmissive layer 4 and the low refractive index layer 2, and adheres the transmissive layer 4 to the low refractive index layer 2.

### <Configuration Example of Low Refractive Index Layer 2>

The refractive index of the low refractive index layer 2 is preferably 1.25 or less, more preferably 1.20 or less, and still more preferably 1.15 or less. The low refractive index layer 2 is preferably solid, and its refractive index is preferably 1.05 or more. The difference between the refractive index of the transmissive layer 4 and that of the low refractive index layer 2 is preferably 0.20 or more, more preferably 0.23 or more, and still more preferably 0.25 or more. A low refractive index layer 2 having a refractive index of 1.25 or less can be formed by using, for example, a porous material. The thickness of the low refractive index layer 2 is, for example, from 0.3 µm to 5.0 µm. The low refractive index layer 2 may be formed by being coated on a base film (not illustrated) such as an acrylic film. The low refractive index layer 2 and the base film (not illustrated) are disposed in the following order: the first adhesive layer 7, the low refractive index layer 2, the base film (not illustrated), and the third adhesive layer 9. The thickness of the base film (not illustrated) is, for example, 5 µm or more and 100 µm or less, and preferably 50 µm or less.

When the low refractive index layer 2 is a porous material, the porosity is preferably 35 volume% or more, more preferably 38 volume% or more, and most preferably 40 volume% or more. Within this range, a particularly low refractive index layer can be obtained. The upper limit of the porosity of the low refractive index layer is, for example, 90 volume% or less, and preferably 75 volume% or less. Within this range, a low refractive index layer having excellent strength can be obtained. Here, the porosity is calculated from the refractive index measured by an ellipsometer using the Lorentz-Lorenz's formula.

As the low refractive index layer 2, for example, a low refractive index layer having voids disclosed in International Publication Pamphlet No. WO 2019/146628 can be used. The entire disclosure of International Publication Pamphlet No. WO 2019/146628 is incorporated herein by reference. Specifically, the low refractive index layer having voids may include silica particles, silica particles having micropores, substantially spherical particles such as silica hollow nanoparticles, fibrous particles such as cellulose nanofibers, alumina nanofibers, silica nanofibers, and flat particles such as nanoclay composed of bentonite. In one embodiment, the low refractive index layer having voids is a porous body formed by directly chemically bonding particles (for example, microporous particles) to each other. Further, at least a part of the particles constituting the low refractive index layer having voids may be bonded to each other via a small amount (e.g., less than or equal to the mass of the particles) of a binder component. The porosity and refractive index of the low refractive index layer can be adjusted according to the particle size, particle size distribution, or the like, of the particles constituting the low refractive index layer.

As a method for obtaining the low refractive index layer having voids, for example, methods described in Japanese Laid-open Patent Publication No. 2010-189212, Japanese Laid-open Patent Publication No. 2008-040171, Japanese Laid-open Patent Publication No. 2006-011175, International Publication Pamphlet No. WO 2004/113966, and references cited therein can be used. All disclosures of Japanese Laid-open Patent Publication No. 2010-189212, Japanese Laid-open Patent Publication No. 2008-040171, Japanese Laid-open Patent Publication No. 2006-011175, and International Publication Pamphlet No. WO 2004/113966 are incorporated herein by reference.

A porous silica body can be suitably used as the low refractive index layer having voids. The porous silica body can be prepared, for example, by the following methods:
A method in which at least one of a hydrolyzable silane or a silsesquioxane, and at least one of a partial hydrolyzate or a dehydration condensate thereof, is hydrolyzed and polycondensed;
A method using at least one of porous particles or hollow fine particles;
A method of producing an aerogel layer by utilizing the spring-back phenomenon; and
A method using a pulverized gel obtained by pulverizing a gel-like silicon compound obtained by a sol-gel method, wherein the obtained pulverized microporous particles are chemically bonded via a catalyst or the like.

The low refractive index layer 2 is not limited to a porous silica body. Similarly, the production method of the low refractive index layer 2 is not limited to the illustrated methods, and any method may be employed. The porous layer is not limited to a porous silica body, and its production method is also not limited to the illustrated methods.

Silsesquioxane is a silicon compound having (RSiO_{1.5}, where R represents a hydrocarbon group) as a basic structural unit, and is strictly different from silica, which has SiO₂ as a basic structural unit. However, since both have a network structure crosslinked through siloxane bonds, a porous body containing silsesquioxane as a basic structural unit is also referred to herein as a silica porous body or a silica-based porous body.

The silica porous body can be composed of microporous particles of a gel-like silicon compound that are mutually bonded. Examples of the microporous particles of the gel-like silicon compound include pulverized bodies of the gel-like silicon compound. The silica porous body can be formed, for example, by coating a substrate with a coating liquid containing the pulverized bodies of the gel-like silicon compound. The pulverized bodies of the gel-like silicon compound can be chemically bonded (e.g., via siloxane bonds), for example, by the action of a catalyst, light irradiation, heating, or the like.

### <Configuration Example of the Light Extraction Layer 3>

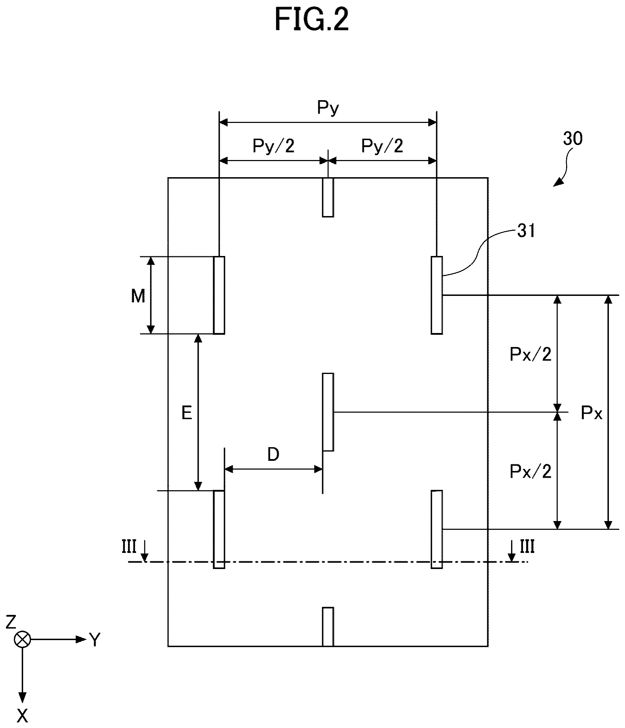

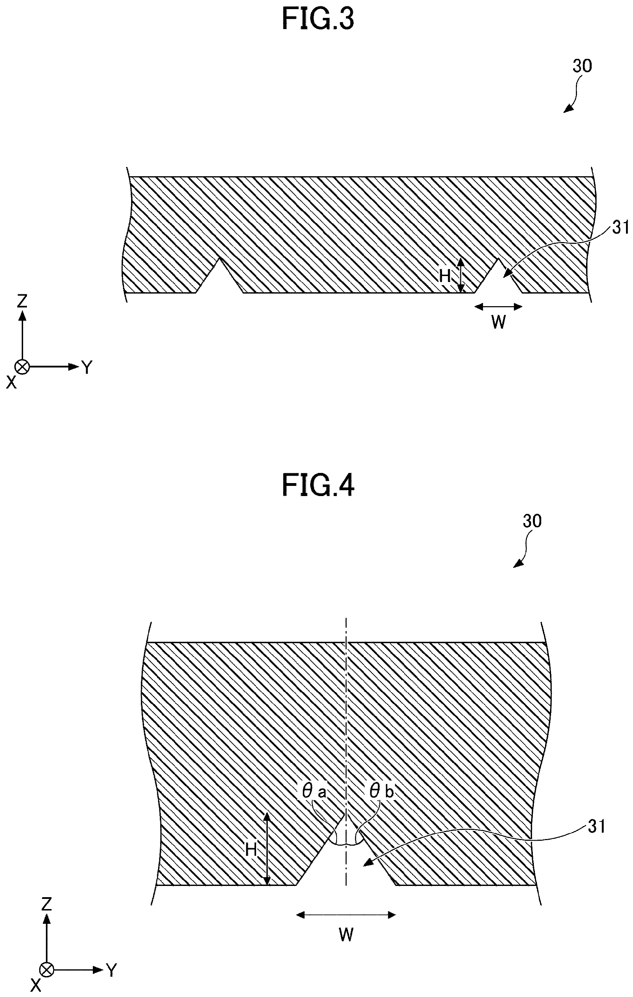

A configuration example of the light extraction layer 3 will be described with reference to FIGS. 1 to 4. FIG. 2 is a plan view schematically illustrating the light extraction layer 3. FIG. 3 is a cross-sectional view schematically illustrating the light extraction layer 3. FIG. 4 is a cross-sectional view schematically illustrating the light extraction portion 31.

The light extraction portion 31 included in the light extraction layer 3 may be formed of a plurality of internal spaces provided in the light extraction layer 3. Each of the internal spaces forms an interface that directs light toward the +Z side by total internal reflection. The internal spaces may also be referred to as cavities. Each internal space has a triangular cross-sectional shape (normal to the X direction, parallel to the YZ plane) with an apex on the +Z side, and directs light L propagating in the +Y direction within the light guide element 1 toward the +Z side. Light L directed toward the +Z side through the internal spaces is emitted from the laminated film 10. The cross-sectional shape of the internal space is not limited to a triangle, and may be, for example, trapezoidal or the like, as long as it has an interface that directs light L propagating in the +Y direction toward the +Z side. The light emission direction can be changed by altering the cross-sectional shape (e.g., the orientation of the apex of a triangle) of the internal space.

Since the laminated film 10 can extract the light L guided by the light guide element 1 by the light extraction portion 31 and control the light distribution of the extracted light L, the visible light transmittance can be 60% or more, and the haze value can be less than 10%. Further, by adjusting the shapes, arrangements, and the like of the plurality of internal spaces in the light extraction portion 31, the light distribution, the emission efficiency, and the luminance distribution of the light L emitted from the laminated film 10 can be controlled. The light extraction portion 31 is typically an air cavity. However, in place of air, the cavity may be filled with a material having a refractive index lower than that of the light extraction portion forming layer 30.

In the light guide element 1, a plurality of internal spaces, which form the light extraction portion 31, are disposed regularly or randomly along a principal plane, that is, a plane substantially parallel to the XY plane. The sizes of the individual internal spaces can be appropriately selected within a range that can be accommodated in the light extraction portion forming layer 30. As for the light extraction portion forming layer 30 including the light extraction portion 31, for example, the light guide layers disclosed in International Publication Pamphlet Nos. WO 2019/182091, WO 2011/124765, WO 2019/087118, and WO 2011/127187 can be used. All disclosures of these publications are incorporated herein by reference.

The light extraction layer 3 is prepared, for example, by laminating a first film having no pattern formed thereon and a second film having a desired fine pattern formed thereon, or by bonding them with an adhesive (including a pressure-sensitive adhesive).

To form the fine pattern on the second film, laser patterning, direct laser imaging, laser drilling, mask-based or maskless laser irradiation, or electron beam irradiation can be used. Further, individual characteristics may be imparted by printing, inkjet printing, screen printing, or similar methods to change the material or the refractive index. Micro- or nano-dispensing, dosing, direct writing, discrete laser sintering, micro-EDM (Electrical Discharge Machining), micro-machining, micro-molding, imprinting, embossing, and the like may also be employed.

From the viewpoint of obtaining good visible light transmittance and low haze, it is preferable that, in plan view, the ratio of the area of the plurality of internal spaces forming the light extraction portions 31 to the area of the light extraction portion forming layer 30 (occupied area ratio) be 30% or less. The occupied area ratio of the internal spaces may be uniform, or may increase with increasing distance from the light source 50 so that the luminance does not decrease as the distance from the light source increases. It is preferable that the occupied area ratio of the internal spaces be uniform. From the viewpoint of obtaining good luminance, the occupied area ratio of the internal spaces is preferably 1% or more. The occupied area ratio of the internal spaces is preferably 1% or more and 30% or less, more preferably 25% or less, and, in order to obtain high visible light transmittance, preferably 10% or less, and more preferably 5% or less.

The above-described features of the light extraction portions 31 are not limited to the plurality of internal spaces formed in the light extraction portion forming layer 30 as exemplified here, but are common to various light distribution control structures.
As the light distribution control structure formed by the plurality of internal spaces, for example, a light distribution structure disclosed in International Publication Pamphlet No. WO 2019/087118 can be used.

The light extraction portions 31 are not limited to the plurality of internal spaces, and may instead be configured as a plurality of prisms disposed in the light extraction portion forming layer 30. The light extraction portion forming layer 30 may be a prism sheet including a plurality of prisms therein. Alternatively, a plurality of protrusions (prism portions) may be directly formed on the surface of the light extraction portion forming layer 30. The refractive index of the light extraction portion forming layer 30 is preferably substantially equal to the refractive indices of the base material 5 and the fourth adhesive layer 6, and the difference (in absolute value) between the refractive indices is preferably 0.15 or less, and more preferably 0.1 or less.

The light distribution control structure in which the light extraction portions 31 include a plurality of internal spaces has higher light utilization efficiency than a light distribution control structure such as a prism sheet. Further, the light distribution can be controlled by adjusting the cross-sectional shape (for example, the angles θa and θb of the inclined surfaces in FIG. 4), size, arrangement density, distribution, and the like of the internal spaces. On the other hand, the visible light transmittance and haze value of the laminated film 10 can be controlled by adjusting the cross-sectional shape, size, arrangement density, and distribution of the plurality of internal spaces included in the light extraction portions 31. The visible-light transmittance of the laminated film 10 is 60% or more, preferably 65% or more, more preferably 70% or more, still more preferably 75% or more, and yet more preferably 80% or more. The haze value of the laminated film 10 is less than 10%, preferably less than 9%, more preferably less than 8%, still more preferably less than 7%, yet more preferably less than 6%, even more preferably less than 5%, and particularly preferably less than 4% or less than 3%. The haze value may be measured using a haze meter.

The size and density of the internal spaces affect the haze value. The size (length M and width W; see FIGS. 2 to 4) of each internal space is preferably such that the length M is 10 µm or more and 500 µm or less, and the width W is 1 µm or more and 100 µm or less, for example. From the viewpoint of light extraction efficiency of the light extraction layer 3, the height H is preferably 1 µm or more and 100 µm or less. The plurality of internal spaces are preferably uniformly distributed in a discrete manner, and, for example, preferably disposed periodically as illustrated in FIG. 2. The pitch Px is preferably, for example, 10 µm or more and 500 µm or less, and the pitch Py is preferably, for example, 10 µm or more and 500 µm or less. The interval E in FIG. 2 represents an interval between the plurality of internal spaces in the X direction, and the interval D in FIG. 2 represents an interval between the plurality of internal spaces in the Y direction.

### <Configuration Example of the Transmissive layer 4>

As illustrated in FIG. 1, the transmissive layer 4 can be formed from a film having flat surfaces on both sides. The material used for the transmissive layer 4 is preferably one having a low light absorption coefficient. For example, as the material of the transmissive layer 4, an acrylic-based film such as PMMA (polymethyl methacrylate), a cycloolefin-based film such as COP (cyclo olefin polymer), a polyethylene-based film such as PET (polyethylene terephthalate), or a polycarbonate-based film may be used.

From the viewpoint of incidence efficiency at which light from the light source 50 enters the laminated film 10, the thickness t3 of the transmissive layer 4 is preferably 30 µm or more, more preferably 40 µm or more, and still more preferably 60 µm or more or 100 µm or more. On the other hand, from the viewpoint of imparting flexibility, the thickness t3 of the transmissive layer 4 is preferably 800 µm or less, more preferably 600 µm or less, still more preferably 500 µm or less or less than 500 µm, and particularly preferably 400 µm or less. The refractive index of the transmissive layer 4 is preferably, for example, in the range of 1.45 to 1.60. It is also preferable that a film similar to the transmissive layer 4 be used as each of a base film on which the low refractive index layer 2 is coated, the light extraction layer 3, and a base film to which the light extraction layer 3 is bonded.

<Examples of Configurations of the First to Fourth Pressure-Sensitive Adhesive Layers>

Each of the first pressure-sensitive adhesive layer 7, the second pressure-sensitive adhesive layer 8, the third pressure-sensitive adhesive layer 9, and the fourth pressure-sensitive adhesive layer 6 may be appropriately selected from at least one of a pressure-sensitive adhesive and an adhesive, for example, an acrylic-based or polyester-based adhesive. The refractive index of each of the first pressure-sensitive adhesive layer 7, the second pressure-sensitive adhesive layer 8, the third pressure-sensitive adhesive layer 9, and the fourth pressure-sensitive adhesive layer 6 is preferably substantially equal to that of the transmissive layer 4, and is preferably within a range of 1.45 to 1.60.

### <Configuration Example of Optical incoupling element 40>

The optical incoupling element 40 includes a bottom surface 41 for being laminated on a surface such as an upper surface of the transmissive layer 4, a light incident surface 42 through which light L from a light source 50 enters, and an inclined surface 43 that reflects the light L incident on the optical incoupling element 40 from the light source 50 and guides it toward the transmissive layer 4. The inclined surface 43 can control the direction of the light incident on the inclined surface 43 at an angle smaller than the critical angle. The inclined surface 43 may be either a flat surface or a curved surface. The curved surface of the inclined surface 43 may be a part of a spherical surface or an aspherical surface. Examples of the aspherical surface include a parabolic surface. In the example illustrated in FIG. 1, the optical incoupling element 40 has a tapered shape in which the thickness decreases with increasing distance from the light source 50.

When a plurality of light sources 50 are disposed side by side, the laminated film 10 may include a plurality of optical incoupling elements 40, or may include a single optical incoupling element 40 having a length that allows light from each of the light sources 50 to be incident thereon in the direction in which the light sources 50 are disposed side by side.

The optical incoupling element 40 can be an "optical incoupling element" disclosed in International Publication Pamphlet No. WO 2022/030544. The entire disclosure of International Publication Pamphlet No. WO 2022/030544 is incorporated herein by reference.

The optical incoupling element 40 may be any element that is capable of controlling the direction of reflection of light L incident thereon at an angle less than the critical angle, and may be, for example, a diffraction grating or a directional layer including an optical cavity. The directional layer may be formed, for example, by bonding another film to a film on which an air cavity pattern is formed. The directional layer may be, for example, an "optical incoupling tape" disclosed in International Publication Pamphlet No. WO 2022/030543. The entire disclosure of International Publication Pamphlet No. WO 2022/030543 is incorporated herein by reference.

### [Examples and Comparative Examples]

Examples and comparative examples are described below. However, the present invention is not limited to these examples.

### <Evaluation Method>

### (Evaluation of Refractive Index)

After forming a low refractive index layer on an acrylic film, the acrylic film was cut into pieces measuring 50 mm × 50 mm, which were bonded to the surface of a glass plate (thickness: 3 mm) with a pressure-sensitive adhesive layer. A sample in which light reflection from the back surface of the glass plate was prevented was prepared by coloring the center of the back surface of the glass plate (diameter: about 20 mm) with a black marker. The prepared sample was set in an ellipsometer (model: VASE, manufactured by J.A. Woollam Japan Co., Ltd.), and the refractive index was measured at a wavelength of 550 nm under conditions in which the incident angle was 50° or more and 80° or less. The average of the measured values was taken as the refractive index.

### (Evaluation of Emission Intensity)

Light from the light source 50 was incident into the laminated films according to the Examples and Comparative Examples, and light was extracted from the light extraction layer side. The extracted light was visually evaluated for emission intensity. Definitions of the evaluation grades "A" to "C" for emission intensity are as follows:
A: Good (attenuation of emission intensity is small).
B: Fair (the emission intensity is lower than that of A, but attenuation of emission intensity is small).
C: Poor (attenuation of emission intensity is greater than that of A and B, and the emission intensity decreases toward the side opposite to the side on which the light source 50 is located in the direction in which light is guided).

### (Evaluation of Emission Color)

Light from the light source 50 was incident into the laminated films according to the Examples and Comparative Examples, and light was extracted from the light extraction layer side. The emission color of the extracted light was visually evaluated. Definitions of the evaluation marks "o" and "×" for emission color are as follows:
∘: White.
×: The luminance decreases, and the luminance decreases toward the side opposite to the side where the light source 50 is located in the direction in which light is guided (corresponding to Comparative Examples 1, 2, and 4 in which the adherend is a high-transmittance glass). Alternatively, the illumination light becomes bluish and is not white (corresponding to Comparative Example 3 in which the adherend is a float glass). The high-transmittance glass is a glass having small absorption and scattering of incident light. The float glass is a glass having slightly greater absorption and scattering of incident light than the high-transmittance glass.

### (Evaluation of Presence)

The presence of the laminated film on the adherend 20, as viewed from the side where light was extracted from the laminated film according to the Examples and Comparative Examples, was visually evaluated. Definitions of the evaluation indices for presence ("o" and "×") are as follows:
∘: The presence of the laminated film is not perceived.
×: The presence of the laminated film is perceived.

### (Evaluation of Flexibility)

The flexibility of the laminated films according to the Examples and Comparative Examples was evaluated by a sensory (visual/tactile) test. Definitions of the evaluation indices for flexibility ("o" and "×") are as follows:
∘: The film is flexible enough to be wound into a roll when in a long length.
×: The film is too stiff to be wound into a roll when in a long length.

### <Manufacturing Method>

### (Manufacturing Example 1: Preparation of a Low Refractive Index Layer with a Base Film)

Eight parts of methyltrimethoxysilane were dissolved in 18 parts of dimethyl sulfoxide (DMSO). To this mixture, 4 parts of a 0.01 mol/L aqueous oxalic acid solution were added, and the mixture was stirred at room temperature for 30 minutes to hydrolyze the methyltrimethoxysilane. Subsequently, 65 parts of dimethyl sulfoxide, 3 parts of aqueous ammonia having a concentration of 28%, and 2 parts of pure water were added, followed by stirring at room temperature for 15 minutes and heat aging at 40°C for 20 hours to obtain a gel-like compound.

The gel-like compound obtained by the above heat aging was crushed into granules having sizes of several millimeters to several centimeters. Isopropyl alcohol (IPA) was added in an amount four times that of the gel, followed by gentle stirring. The mixture was then allowed to stand at room temperature for 6 hours to decant the solvent and catalyst from the gel. The same decantation procedure was repeated three times to complete solvent replacement.

The gel-like compound obtained by solvent replacement was subjected to high-pressure media-less grinding using a homogenizer (trade name: UH-50, manufactured by SMT Co., Ltd.) to prepare a sol solution. The volume-average particle diameter, which indicates the particle size distribution of the sol solution, was measured using a dynamic light scattering-type particle size analyzer (trade name: UPA-EX150, manufactured by Nikkiso Co., Ltd.) and was found to be in the range of 0.50 µm to 0.70 µm. Further, a 1.5 wt.% isopropyl alcohol solution of a photobase generator (trade name: WPBG266, manufactured by Wako Pure Chemical Industries, Ltd.) was prepared, and 0.031 parts of this solution were added to 0.75 parts of the sol dispersion, followed by the addition of 0.018 parts of 5% bis(trimethoxysilyl)ethane to prepare a coating solution.

Next, the coating solution for forming a low refractive index layer was applied onto a base film (PMMA: polymethyl methacrylate) having a thickness of 30 µm, such that the thickness after curing became 1 µm. The coating was then heated and dried to cure, thereby obtaining a low refractive index layer with the base film having a total thickness of 31 µm. The refractive index of the obtained low refractive index layer was 1.16.

### (Manufacturing Example 2: Preparation of Low Refractive Index Layer with Base Film)

To 20 parts of an alumina sol solution (4.9% concentration, manufactured by Kawaken Fine Chemicals Co., Ltd.), 13 parts of water were added, and after heating at 80°C, 3 parts of ammonia (NH₃) were added. The mixture was further heated at 80°C for 10 hours to obtain a gel-like compound. Except that this gel-like compound was used in place of the gel-like compound of Manufacturing Example 1, the same procedure as in Manufacturing Example 1 was carried out, thereby obtaining a low refractive index layer with a base film. The refractive index of the obtained low refractive index layer was 1.24.

### (Manufacturing Example 3: Preparation of Low Refractive Index Layer with Base Film)

A low refractive index layer with a base film was obtained in the same manner as in Manufacturing Example 1, except that a thermosetting silicone material (trade name: OF-127, manufactured by Shin-Etsu Chemical Co., Ltd.) having a refractive index of 1.41, as described in Japanese Laid-open Patent Publication No. 2008-299117, was used. The refractive index of the obtained low refractive index layer was 1.41.

### (Manufacturing Example 4: Preparation of Light extraction portion forming layer)

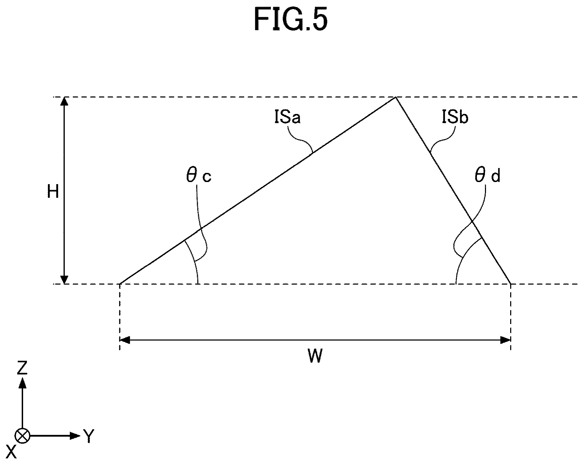

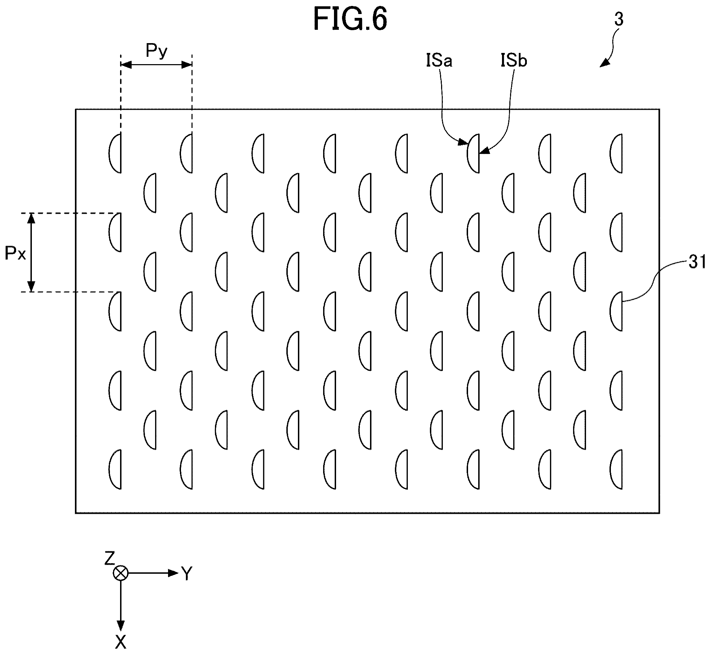

A light extraction portion forming layer having recesses on one main surface was prepared according to the method described in Japanese Laid-open Patent Publication No. 2013-524288. More specifically, the procedure was as follows. The surface of a PMMA film (thickness: 128 µm) was coated with a lacquer (trade name: Finecure RM-64, manufactured by Sanyo Chemical Industries, Ltd.). A predetermined optical pattern was embossed on the surface of the film including the lacquer, and the lacquer was then cured. Thus, a light extraction portion forming layer having a cross-sectional shape as illustrated in FIG. 5, and including recesses having a plan-view shape as illustrated in FIG. 6, was prepared. Here, FIG. 5 is a cross-sectional view schematically illustrating an example of the light extraction portion in this example, and FIG. 6 is a plan view schematically illustrating an example of the light extraction portion in this example.

The height (or depth) H of the prepared recess serving as the light extraction portion was 10 µm, the width W was 10.5 µm, the inclination angle (tilt angle) θc of the first inclined surface ISa was 49°, and the inclination angle θd of the second inclined surface ISb was 80°. Furthermore, the pitch Py of the recesses in the direction in which light is guided (for example, the Y direction) was 300 µm, and the pitch Px in the direction orthogonal to the direction in which light is guided (for example, the X direction) was 300 µm.

### (Example 1)

A fourth adhesive layer 6 (material: polyester resin, thickness: 7 µm) was disposed on the main surface of the light extraction layer 3 prepared in Manufacturing Example 4, on which recesses were formed. A base material 5 (material: PMMA, thickness: 30 µm) was laminated via the fourth adhesive layer 6, thereby obtaining the light extraction layer 3 having a total thickness of 165 µm. Furthermore, a transmissive layer 4 (material: PMMA, thickness: 130 µm) was laminated via a second adhesive layer 8 (trade name: CS9864, manufactured by Nitto Denko Corporation, thickness: 100 µm) on the side of the base material 5 opposite to the fourth adhesive layer 6, thereby obtaining a light guide element 1 having a total thickness of 395 µm. Then, the base film side of the low refractive index layer 2 with a base film prepared in Manufacturing Example 1 was laminated, via a third adhesive layer 9 (material: acrylic resin, thickness: 10 µm), on the side of the transmissive layer 4 opposite to the second adhesive layer 8, to obtain a laminated film 10 having a total thickness of 456 µm. In addition, a first adhesive layer 7 (material: acrylic resin, thickness: 10 µm) was disposed on the side of the low refractive index layer 2 with the base film (30 µm) opposite to the base film, and the laminated film 10 was placed on a high-transmittance glass (manufactured by Nippon Sheet Glass Co., Ltd., thickness: 5 mm) as an adherend 20 via the first adhesive layer 7.

As described above, the laminated film 10 including the light extraction layer 3, the fourth adhesive layer 6, the base material 5, the second adhesive layer 8, the transmissive layer 4, the third adhesive layer 9, the low refractive index layer 2 with the base film, and the first adhesive layer 7 was prepared.

As illustrated in FIG. 1, the laminated film 10 was formed so that the end portion 3a of the light extraction layer 3 was located inward of the end portion 4a of the transmissive layer 4. An optical incoupling element 40 for introducing light from the light source 50 into the laminated film 10 was disposed in a region 4b of the transmissive layer 4 not overlapping with the light extraction layer 3 in plan view. The length of the region 4b in the Y direction was 50 mm. The optical incoupling element 40 was laminated on the transmissive layer 4 through a pressure-sensitive adhesive layer, for example. The light source 50 was disposed such that light can be introduced into the laminated film 10 through the optical incoupling element 40. The evaluation described above was performed on the laminated film 10 disposed on the adherend 20.

### (Example 2)

The method was the same as that of Example 1 except that the low refractive index layer with the base film prepared in Manufacturing Example 2 was used in place of Manufacturing Example 1.

### (Example 3)

The method was the same as that of Example 1 except that the light source 50 was disposed at the end portion 4a of the transmissive layer 4 in place of the optical incoupling element 40.

### (Example 4)

The method was the same as that of Example 1 except that another second adhesive layer (CS9862 manufactured by Nitto Denko Co., Ltd., thickness 50 µm) was used in place of the second adhesive layer 8, and a thin light extraction portion forming layer (thickness 60 µm) was used in place of the light extraction portion forming layer 30.

### (Example 5)

The method was the same as that of Example 1 except that a thin transmissive layer (thickness 30 µm) was used in place of the transmissive layer 4.

### (Example 6)

The method was the same as that of Example 1 except that a thin transmissive layer (thickness 40 µm) was used in place of the transmissive layer 4, and the light source 50 was disposed at the end portion of the thinner transmissive layer (thinner than transmissive layer 4) in place of the optical incoupling element 40.

### (Comparative Example 1)

The method was the same as that of Example 1 except that a low refractive index layer with a base film prepared in Manufacturing Example 3 was used in place of Manufacturing Example 1.

### (Comparative Example 2)

The method was the same as that of Example 1 except that the low refractive index layer 2 with a base film and the first adhesive layer 7 were not provided.

### (Comparative Example 3)

The method was the same as that of Example 1 except that float glass (manufactured by Nippon Sheet Glass Co., Ltd., thickness 5 mm) was used in place of high-transmittance glass, and the low refractive index layer 2 with a base film and the first adhesive layer 7 were not provided.

### (Comparative Example 4)

The method was the same as that of Example 1 except that a thicker transmissive layer (thickness 2000 µm) was used in place of the transmissive layer 4, and the light source 50 was disposed at the end portion of the thicker transmissive layer (thicker than transmissive layer 4) in place of the optical incoupling element 40.

Table 1 indicates a list of conditions and evaluation results for Examples 1 to 6 and Comparative Examples 1 to 3. In the column "flexibility/presence" in Table 1, "o" was indicated when both flexibility and presence were evaluated as "o", and "×" is indicated when at least one of flexibility or presence was evaluated as "×".

**[Table 1]**

| | Adherend | 1st Adhesive Layer | Low Refractive Index Layer | Light Guide Element Thickness (*µ*m) | Transmissive Layer Thickness (*µ*m) | Total Thickness (*µ*m) | 2nd Adhesive Layer Thickness (*µ*m) | Ratio of 2nd Adhesive Layer to Light Guide Element (%) | Optical Incoupling Method | Emission Intensity | Emission Color | Flexibility/ Presence |
|---|---|---|---|---|---|---|---|---|---|---|---|---|
| Example 1 | High-Transmittance Glass | Present | 1.16 | 395 | 130 | 446 | 100 | 25.3 | Optical Incoupling Element | A | ○ | ○ |
| Example 2 | High-Transmittance Glass | Present | 1.24 | 395 | 130 | 446 | 100 | 25.3 | Optical Incoupling Element | A | ○ | ○ |
| Example 3 | High-Transmittance Glass | Present | 1.16 | 395 | 130 | 446 | 100 | 25.3 | End Portion | A | ○ | ○ |
| Example 4 | High-Transmittance Glass | Present | 1.16 | 277 | 130 | 328 | 50 | 18.0 | Optical Incoupling Element | A | ○ | ○ |
| Example 5 | High-Transmittance Glass | Present | 1.16 | 295 | 30 | 346 | 100 | 33.9 | Optical Incoupling Element | B | ○ | ○ |
| Example 6 | High-Transmittance Glass | Present | 1.16 | 305 | 40 | 356 | 100 | 32.7 | End Portion | B | ○ | ○ |
| Comparative Example 1 | High-Transmittance Glass | Present | 1.41 | 395 | 130 | 446 | 100 | 25.3 | Optical Incoupling Element | C | × | ○ |
| Comparative Example 2 | High-Transmittance Glass | Present | Absent | 395 | 130 | N/A | 100 | 25.3 | Optical Incoupling Element | C | × | ○ |
| Comparative Example 3 | Float Glass | Present | Absent | 395 | 130 | N/A | 100 | 25.3 | Optical Incoupling Element | A | × | ○ |
| Comparative Example 4 | High-Transmittance Glass | Present | 1.16 | 2265 | 2000 | 2316 | 100 | 4.4 | End Portion | A | O | × |

As illustrated in Table 1, in Examples 1 to 4, the "emission intensity" was evaluated as "A", the "emission color" was evaluated as "o", and the "flexibility/presence" was evaluated as "∘". In Examples 5 to 6, the "emission intensity" was evaluated as "B", the "emission color" was evaluated as "o", and the "flexibility/presence" was evaluated as "o".

On the other hand, in Comparative Examples 1 and 2, the "emission intensity" was evaluated as "C", the "emission color" was evaluated as "×", and the "flexibility/presence" was evaluated as "∘". In Comparative Example 3, the "emission intensity" was evaluated as "A", the "emission color" was evaluated as "×", and the "flexibility/presence" was evaluated as "o". In Comparative Example 4, the "emission intensity" was evaluated as "A", the "emission color" was evaluated as "o", and the "flexibility/presence" was evaluated as "×".

As described above, it has been found that in Examples 1 to 6, a laminated film excellent in all of the "emission intensity", the "emission color", and the "flexibility/presence" can be obtained.

### [Various Modifications]

The laminated film 10 may also have the adherend 20 disposed on the side of the low refractive index layer 2 opposite to the light guide element 1. By including the adherend 20 in the laminated film 10, the laminated film 10 with the adherend 20 having excellent designability can be provided.

The adherend 20 is not limited to glass, and may also be an electronic substrate such as a liquid crystal cell, or a non-light-transmissive member such as a ceiling, wall, or floor. The light extraction layer 3 is not limited to extracting light L from the side opposite to the side on which the adherend 20 is disposed, and may alternatively extract light L from the same side as the adherend 20. In this case, if the adherend 20 has high light transmissivity, the extracted light L may pass through the adherend 20, whereas if the adherend 20 has low light transmissivity, the adherend 20 may reflect the extracted light L. The light extraction layer 3 may also be disposed between the transmissive layer 4 and the low refractive index layer 2.

A pattern layer for improving luminance uniformity may be disposed between the transmissive layer 4 and the light extraction layer 3. An optical coupling layer disclosed in International Publication Pamphlet No. WO 2022/025067 may be used as such a pattern layer. The entire disclosure of International Publication Pamphlet No. WO 2022/025067 is incorporated herein by reference. The pattern layer is formed by a first portion having a refractive index lower than that of the transmissive layer 4 and a second portion having a refractive index higher than that of the first portion. The first portion may be a low refractive index layer such as the low refractive index layer 2 or an air cavity. The second portion may be composed of a pressure-sensitive adhesive layer or may be formed by filling the void portion of the low refractive index layer with a material such as a pressure-sensitive adhesive. From the viewpoint of reducing the presence of the laminated film 10, even when there is a pattern layer, the thickness of the light guide element 1 is preferably 1000 µm or less, and more preferably 800 µm or less, 700 µm or less, 600 µm or less, 500 µm or less, 400 µm or less, and 300 µm or less.

A base film may be further disposed on the side of the light extraction layer 3 opposite to the side on which the transmissive layer 4 is located. This base film may be a hard coat layer or an antireflection layer. Further, a low refractive index layer may be disposed between the light extraction layer 3 and the base film. From the viewpoint of reducing the presence of the laminated film 10, even when these elements are present, the thickness of the light guide element 1 is preferably 1000 µm or less, and more preferably 800 µm or less, 700 µm or less, 600 µm or less, 500 µm or less, 400 µm or less, and 300 µm or less.

The transmissive layer 4 and the light extraction layer 3 are not limited to separate films, and the transmissive layer 4 and the light extraction layer 3 may be integrated. For example, the transmissive layer 4 having patterned recesses may perform both the functions of the transmissive layer 4 and the light extraction layer 3.

The light extraction layer 3 does not necessarily have the base material 5. The light guide element 1 does not necessarily have the second adhesive layer 8.

The low refractive index layer 2 is coated on a base film (not illustrated), and the first adhesive layer 7, the low refractive index layer 2, the base film (not illustrated), and the third adhesive layer 9 are disposed in this order. However, the order of the low refractive index layer 2 and the base film (not illustrated) may be reversed, or the base film (not illustrated) may be omitted. Further, the low refractive index layer 2 may be directly coated on the light guide element 1, that is, the transmissive layer 4, and the third adhesive layer 9 and the base film (not illustrated) may be omitted.

When the light guide element is handled as a roll, the light guide element and the low refractive index layer may be handled as a laminated film, or the light guide element, the low refractive index layer, and the first adhesive layer may be handled as a laminated film. When handled as a roll, a surface protective film having a substrate and an adhesive may be appropriately attached to the surfaces of the light guide element and the low refractive index layer. Further, a release liner may be bonded to the surface of the first adhesive layer.

Although a preferred embodiment has been described in detail above, the invention is not limited to the above-described embodiment, and various modifications and substitutions may be made to the above-described embodiment without departing from the scope of the appended claims.

Ordinal numbers, quantities, and the like used in the description of the embodiment are all exemplified merely for the purpose of concretely explaining the technology of the present invention, and the present invention is not limited to the exemplified numbers. Further, the connection relationship between the components is illustrated merely for the purpose of concretely explaining the technology of the present invention, and the connection relationship necessary for realizing the functions of the present invention is not limited thereto.

Since the laminated film according to the embodiment has excellent designability, it can be used in combination with a light source and arranged on a building element such as glass, windows, walls, floors, or ceilings, to illuminate an interior or exterior space while improving the aesthetic appearance of the building element. Further, when the laminated film according to the embodiment is disposed in a partition, it can be used for partitioning a room or providing privacy for a desired space while enhancing the design appearance of the partition. Furthermore, when the laminated film is disposed on a glass substrate or the like of a display device, such as a liquid crystal panel or an organic EL (electroluminescent) display panel, it can be used for applications such as backlight illumination in the display device while enhancing its aesthetic design. Still further, the laminated film according to the embodiment can provide novel applications other than those described above.

The laminated film according to the embodiment and a light source disposed in the vicinity of an end portion of the laminated film can form a surface illumination device. The light from the light source may be incident on the inside of the laminated film from an end face of the laminated film along the lamination direction, or may be incident on the inside of the laminated film from a face (the main face of the laminated film) intersecting the end face. The light from the light source may enter the laminated film directly without passing through an optical incoupling element, or may enter the laminated film through an optical incoupling element.

The present application is based on and claims priority to Japanese patent application No. 2023-092333 filed on June 5, 2023, with the Japan Patent Office, the entire contents of which are hereby incorporated by reference.

Aspects of the embodiment of the present invention are, for example, as follows.
<1> A laminated film including:
   a light guide element configured to guide light incident thereto from a light source; and
   a low refractive index layer disposed on one side of the light guide element and having a refractive index of 1.30 or less,
   wherein the light guide element includes a light extraction portion configured to extract the light guided by the light guide element,
   a thickness of the light guide element is 1000 µm or less, and
   a total thickness from a first surface to a second surface is 1500 µm or less, the first surface being a surface of the light guide element on a side opposite to a side on which the low refractive index layer is disposed, and the second surface being a surface of the low refractive index layer on a side opposite to the light guide element.
<2> The laminated film according to <1>, further comprising:
   a first pressure-sensitive adhesive layer disposed on the side of the low refractive index layer opposite to the light guide element.
<3> The laminated film according to any one of <1> to <3>, wherein the light guide element includes:
   a light extraction layer including the light extraction portion; and
   a transmissive layer that transmits light incident from the light source.
<4> The laminated film according to <3>, wherein a thickness of the transmissive layer is 30 µm or more.
<5> The laminated film according to <3> or <4>, wherein the light extraction portion includes a plurality of internal spaces provided in the light extraction layer.
<6> The laminated film according to any one of <3> to <5>, further comprising:
   a second pressure-sensitive adhesive layer disposed between the transmissive layer and the light extraction layer,
   wherein a ratio of a thickness of the second pressure-sensitive adhesive layer to a thickness of the light guide element is 10% or more.
<7> The laminated film according to any one of <3> to <6>, wherein, in plan view, an end portion of the light extraction layer is located inward of an end portion of the transmissive layer.
<8> The laminated film according to <7>, further including:
   an optical incoupling element disposed in a region of the transmissive layer that does not overlap the light extraction layer in plan view, and configured to allow light from the light source to be incident.
<9> The laminated film according to any one of <1> to <8>, further including:
   an adherend disposed on the side of the low refractive index layer opposite to the light guide element.
<10> A roll including the laminated film according to any one of <1> to <9>, the laminated film being wound into the roll.

### Reference Signs List

- 1:: Light guide element
- 11:: First surface
- 12:: Second surface
- 2:: Low refractive index layer
- 3:: Light extraction layer
- 30:: Light extraction portion forming layer
- 31:: Light extraction portion
- 3a:: End portion
- 4:: Transmissive layer
- 4a:: End portion
- 4b:: Region
- 5:: Base material
- 6:: Fourth pressure-sensitive adhesive layer
- 7:: First pressure-sensitive adhesive layer
- 8:: Second pressure-sensitive adhesive layer
- 9:: Third pressure-sensitive adhesive layer
- 10:: Laminated film
- 20:: Adherend
- 40:: Optical incoupling element
- 41:: Bottom surface
- 42:: Light incidence surface
- 43:: Inclined surface
- 50:: Light source
- L:: Light
- t1:: Thickness of light guide element
- t2:: Total thickness of laminated film
- t3:: Thickness of transmissive layer
- D:: Distance between a plurality of internal spaces in
- Y: direction
- E:: Distance between a plurality of internal spaces in
- X: direction
- ISa:: First inclined surface
- ISb:: Second inclined surface
- M:: Length
- Px:: Pitch of a plurality of internal spaces in X direction
- Py:: Pitch of a plurality of internal spaces in Y direction
- H:: Height
- W:: Width
- θa, θb:: Angle
- θc, θd:: Inclination angle

## Claims

1. A laminated film comprising:
a light guide element configured to guide light incident thereto from a light source; and
a low refractive index layer disposed on one side of the light guide element and having a refractive index of 1.30 or less,
wherein the light guide element includes a light extraction portion configured to extract the light guided by the light guide element,
a thickness of the light guide element is 1000 µm or less, and
a total thickness from a first surface to a second surface is 1500 µm or less, the first surface being a surface of the light guide element on a side opposite to a side on which the low refractive index layer is disposed, and the second surface being a surface of the low refractive index layer on a side opposite to the light guide element.

2. The laminated film according to claim 1, further comprising:
a first pressure-sensitive adhesive layer disposed on the side of the low refractive index layer opposite to the light guide element.

3. The laminated film according to claim 1 or 2, wherein the light guide element includes:
a light extraction layer including the light extraction portion; and
a transmissive layer that transmits light incident from the light source.

4. The laminated film according to claim 3, wherein a thickness of the transmissive layer is 30 µm or more.

5. The laminated film according to claim 3, wherein the light extraction portion includes a plurality of internal spaces provided in the light extraction layer.

6. The laminated film according to claim 3, further comprising:
a second pressure-sensitive adhesive layer disposed between the transmissive layer and the light extraction layer,
wherein a ratio of a thickness of the second pressure-sensitive adhesive layer to a thickness of the light guide element is 10% or more.

7. The laminated film according to claim 3, wherein, in plan view, an end portion of the light extraction layer is located inward of an end portion of the transmissive layer.

8. The laminated film according to claim 7, further comprising:
an optical incoupling element disposed in a region of the transmissive layer that does not overlap the light extraction layer in plan view, and configured to allow light from the light source to be incident.

9. The laminated film according to claim 1 or 2, further comprising:
an adherend disposed on the side of the low refractive index layer opposite to the light guide element.

10. A roll comprising:
the laminated film according to claim 1 or 2, the laminated film being wound into the roll.
